(19) Europäisches Patentamt
European Patent Office
Office européen des brevets

(11) **EP 3 321 635 B1**

(12) **FASCICULE DE BREVET EUROPEEN**

(45) Date de publication et mention
de la délivrance du brevet:
**26.05.2021 Bulletin 2021/21**

(51) Int Cl.:
*G01D 1/00* *(2006.01)*     *G05B 13/04* *(2006.01)*
*G05B 17/02* *(2006.01)*    *G06F 9/50* *(2006.01)*

(21) Numéro de dépôt: **17201017.5**

(22) Date de dépôt: **10.11.2017**

(54) **SYSTÈME DE PILOTAGE POUR LE PILOTAGE D'UNE INSTALLATION ÉLECTRIQUE ET PROCÉDÉ DE RÉALISATION D'UN TEL SYSTÈME**

STEUERUNGSSYSTEM FÜR DIE STEUERUNG EINER ELEKTRISCHEN ANLAGE, UND HERSTELLUNGSVERFAHREN EINES SOLCHEN SYSTEMS

CONTROL SYSTEM FOR CONTROLLING AN ELECTRICAL INSTALLATION AND METHOD FOR PRODUCING SUCH A SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2016 FR 1661018**

(43) Date de publication de la demande:
**16.05.2018 Bulletin 2018/20**

(73) Titulaire: **Commissariat à l'Energie Atomique et aux Energies Alternatives 75015 Paris (FR)**

(72) Inventeurs:
• **JOUMAA, Hussein**
  **38400 Saint Martin D'Hères (FR)**
• **HA, Duy Long**
  **73000 CHAMBERY LE VIEUX (FR)**

(74) Mandataire: **Cabinet Camus Lebkiri
25 rue de Maubeuge
75009 Paris (FR)**

(56) Documents cités:
WO-A1-2015/110150     WO-A2-2013/186282
DE-A1-102013 018 596     US-A- 3 673 392
US-A1- 2016 048 112

EP 3 321 635 B1

**Description**

**DOMAINE TECHNIQUE DE L'INVENTION**

Le domaine technique de l'invention est celui du pilotage des installations électriques. La présente invention concerne un système de pilotage d'une installation électrique et en particulier un système de pilotage d'une installation électrique modulaire. La présente invention concerne également un procédé de réalisation d'un tel système de pilotage.

**ARRIERE-PLAN TECHNOLOGIQUE DE L'INVENTION**

De manière générale, un système de pilotage pour le pilotage d'une installation électrique (par exemple, le système décrit dans le document WO 2013/186282 A2) génère des consignes de pilotage à partir d'un calcul effectué par un calculateur. Lesdites consignes générées permettent d'obtenir une répartition des charges énergétiques, cette répartition se faisant en fonction d'un objectif à atteindre formulé sous la forme d'équations mathématiques et de contraintes à respecter définies par un utilisateur (consommation énergétique, puissance disponible, etc.). Afin de réaliser un pilotage énergétiquement efficace, un calculateur est en général alimenté par une pluralité de sources de données, lesdites sources de données provenant de l'installation électrique à piloter. Le calculateur peut par exemple prendre en compte des données relatives à la prévision de production photovoltaïque, aux prévisions météorologiques (température extérieure, taux d'ensoleillement, etc.) ainsi qu'aux modèles analytiques des batteries et des bâtiments de l'installation électrique. De plus, afin d'analyser ces différentes données d'entrée, le calculateur peut intégrer dans son calcul des modèles relatifs aux composants de l'installation électrique (batterie, panneaux photovoltaïques, etc.) ainsi que des modèles liés à la thermique. Enfin, comme évoqué précédemment, le calculateur peut prendre en compte des données fournies par l'utilisateur concernant les contraintes de fonctionnement ainsi que l'objectif en termes d'économie d'énergie. A partir de ces différents éléments, le calculateur effectue un calcul et produit en sortie des données de pilotage relatives à l'état de charge ainsi qu'à la réception d'énergie du réseau électrique au prochain pas de pilotage.

Dans le cas d'un centre de données, le système de pilotage précédemment décrit peut être organisé de la manière suivante. Au niveau du centre de données, deux sources de données existent. D'une part les données en temps réel relatives au modèle de batteries, à la production photovoltaïque ainsi qu'à la consommation des serveurs du centre de données sont récupérées par un module de communication de type Modbus. Ces données sont ensuite formatées dans un format structuré du type XML. De plus, toujours au niveau du centre de données, les informations de description de l'infrastructure énergétique du centre de données (nombre de panneaux photovoltaïques, puissance de l'installation photovoltaïque, données concernant les batteries, etc.) sont extraites d'une base de données de configuration et formatées dans un format structuré de type XML. L'ensemble de ces données est ensuite agrégé et interpolé afin d'obtenir un pas de temps d'enregistrement conforme à celui demandé par le calculateur. Les données agrégées sont ensuite formatées dans un format structuré de type XML puis envoyées vers le calculateur. Ce dernier calcule un plan de pilotage comportant des consignes de pilotage et envoie ce dernier au centre de données afin qu'il soit interprété et exécuté.

Cependant, un tel système de pilotage n'est pas facilement adaptable aux changements intervenant au niveau de l'installation électrique et l'ajout d'une nouvelle source de données entraine souvent une modification de l'ensemble du système. Pour les mêmes raisons, un système de pilotage donné sera difficilement adaptable à une deuxième installation électrique différente de celle pour laquelle ledit système a été conçu. De plus, un tel système de pilotage ne prend pas en compte les problématiques de confidentialité. Ainsi, des données sensibles telles que le taux de $CO_2$ qui permet de remonter à la présence d'occupants dans un bâtiment seront traitées de la même manière que des données peu sensibles concernant la température extérieure.

Il existe donc un problème consistant à fournir un système de pilotage adaptable aux évolutions d'une installation électrique, pouvant être facilement adapté à différentes installations électriques et prenant en compte le niveau de sensibilité des différentes sources de données.

**RESUME DE L'INVENTION**

L'invention offre une solution aux problèmes évoqués précédemment, en proposant une architecture modulaire organisée de manière hiérarchique. En particulier, le système proposé s'adapte à l'ajout de nouvelles sources de données grâce à l'utilisation de composants d'agrégation. En outre, les modifications dans le modèle physique utilisé pour le pilotage peuvent être prises en compte grâce à une organisation hiérarchique de ces composants d'agrégation.

Pour cela, un premier aspect de l'invention concerne un système de pilotage d'une installation électrique, ladite installation comportant des sources de données et un dispositif de commande recevant des consignes de pilotage. Le système de pilotage selon un premier aspect de l'invention comporte :

- une pluralité de composants d'agrégation, chaque composant d'agrégation ayant au moins une connexion d'entrée et une connexion de sortie ainsi qu'un moyen de traitement des données configuré pour traiter les données reçues sur la connexion d'entrée ; et

- un module de traitement connecté aux composants d'agrégation, le module de traitement étant configuré pour fournir, à partir des données issues desdits composants d'agrégation des consignes de pilotage au dispositif de commande de l'installation électrique, lesdites consignes de pilotage étant établies en fonction d'un modèle physique.

De plus, le modèle physique est choisi en fonction des sources de données par le module de traitement et les composants d'agrégation étant choisis et connectés entre eux et aux sources de données en fonction dudit modèle physique.

Grâce à l'invention, le système de pilotage est facilement adaptable aux évolutions de l'installation électrique dont il a en charge le pilotage. Les composants d'agrégations permettent notamment de s'interfacer sur les différentes sources de données de l'installation électrique à piloter. Ainsi, l'ajout d'une nouvelle source de donnée nécessite seulement l'ajout d'un nouveau composant d'agrégation, et le système de pilotage n'est modifié qu'à la marge. L'adaptabilité du système de pilotage selon l'invention se traduit également dans l'organisation hiérarchique des composants d'agrégations. En effet, une modification de l'installation électrique peut également entrainer la modification du modèle physique utilisé pour son pilotage. Les composants d'agrégations, du fait de leur aspect modulaire, peuvent prendre en compte ces changements de modèle physique par l'ajout et/ou le retrait d'un ou plusieurs composants d'agrégation et la modification des connexions de ces composants entre eux.

Outre les caractéristiques qui viennent d'être évoquées dans le paragraphe précédent, le système de pilotage selon un premier aspect de l'invention peut présenter une ou plusieurs caractéristiques complémentaires parmi les suivantes, considérées individuellement ou selon toutes les combinaisons techniquement possibles.

Avantageusement, chaque source de données de l'installation électrique est associée à un pas de temps d'échantillonnage, les consignes de pilotage sont établies en fonction d'un pas de temps, dit pas de temps de pilotage, et chaque composant d'agrégation connecté à une source de données ayant un pas de temps d'échantillonnage différent du pas de temps de pilotage est configuré pour fournir, à partir des données reçues de la source de donnée, des données ayant un pas de temps égal au pas de temps de pilotage.

Ainsi, il est possible d'obtenir un même pas de temps, égal au pas de temps de pilotage, et ceux pour l'ensemble des sources de données de l'installation électrique.

Avantageusement, le module de traitement comprend un composant de filtrage comportant des moyens pour envoyer les données à un moyen de calcul et recevoir les résultats des calculs en provenance dudit moyen de calcul.

Avantageusement, l'installation électrique comprend des sources de données dites sensibles et le composant de filtrage comporte des moyens pour chiffrer les données issues des composants d'agrégation configurés pour être connectés à des sources de données dites sensibles, pour envoyer lesdites données chiffrées au moyen de calcul, pour recevoir les résultats chiffrés des calculs en provenance dudit moyen de calcul et pour déchiffrer lesdits résultats.

Ainsi, lorsque des données provenant de certaines sources sont jugées confidentielles, les données sensibles échangées avec le moyen calcul sont chiffrées et la confidentialité de ces dernières est assurée tout le long de la chaine de calcul.

Avantageusement, le module de traitement comprend un composant de stratégie connecté au composant de filtrage, ledit composant de stratégie comportant des moyens pour fournir des consignes de pilotage en fonction des résultats de calcul reçus du composant de filtrage.

Un deuxième aspect de l'invention concerne un procédé de réalisation d'un système de pilotage pour le pilotage d'une installation électrique, ladite installation (IE) comportant des sources de données et un dispositif de commande recevant des consignes de pilotage. Le procédé selon un deuxième aspect de l'invention comprend :

- une étape de mise en place d'une pluralité de composants d'agrégation, chaque composant d'agrégation ayant au moins une connexion d'entrée et une connexion de sortie ainsi qu'un moyen de traitement des données configuré pour traiter les données reçues sur la connexion d'entrée ;
- une étape de connexion de chaque composant d'agrégation à une source de données et/ou à un ou plusieurs composants d'agrégation
- une étape de connexion d'un module de traitement aux composants d'agrégation, ledit module de traitement étant configuré pour fournir, à partir des données issues desdits composants d'agrégation, des consignes de pilotage au dispositif de commande de l'installation électrique, lesdites consignes de pilotage étant établies en fonction d'un modèle physique.

De plus, le modèle physique est choisi en fonction des sources de données par le module de traitement, les composants d'agrégation étant choisis et connectés entre eux et aux sources de données en fonction dudit modèle physique lors de l'étape de mise en place et de l'étape de connexion.

Un troisième aspect de l'invention concerne un produit programme d'ordinateur comprenant des instructions pour l'exécution des étapes du procédé selon le deuxième aspect de l'invention lorsque ledit programme est exécuté sur un ordinateur.

## BREVE DESCRIPTION DES FIGURES

Les figures sont présentées à titre indicatif et nullement limitatif de l'invention.

- La figure 1 montre une représentation schématique d'un système de pilotage selon un premier aspect de l'invention ainsi que d'une installation électrique pilotée par ledit système de pilotage.
- La figure 2 montre une représentation schématique d'un premier mode de réalisation d'un système de pilotage selon un premier aspect de l'invention.
- La figure 3 montre une représentation schématique d'un deuxième mode de réalisation d'un système de pilotage selon un premier aspect de l'invention.
- La figure 4 montre une représentation schématique d'un moyen de traitement selon un troisième mode de réalisation d'un système de pilotage selon un premier aspect de l'invention.
- La figure 5 montre une représentation schématique d'un moyen de traitement selon un quatrième mode de réalisation d'un système de pilotage selon un premier aspect de l'invention.
- La figure 6 montre un ordinogramme d'un procédé de réalisation d'un système de pilotage selon un deuxième aspect de l'invention.

## DESCRIPTION DETAILLEE D'AU MOINS UN MODE DE REALISATION DE L'INVENTION

Sauf précision contraire, un même élément apparaissant sur des figures différentes présente une référence unique. Par ailleurs, les différents modes de réalisation seront illustrés à l'aide d'un exemple de réalisation dans lequel l'installation électrique est un centre de données.

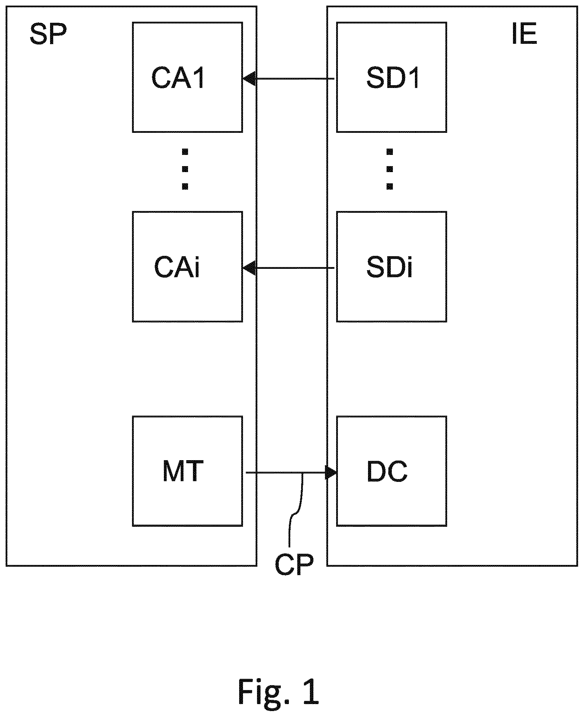

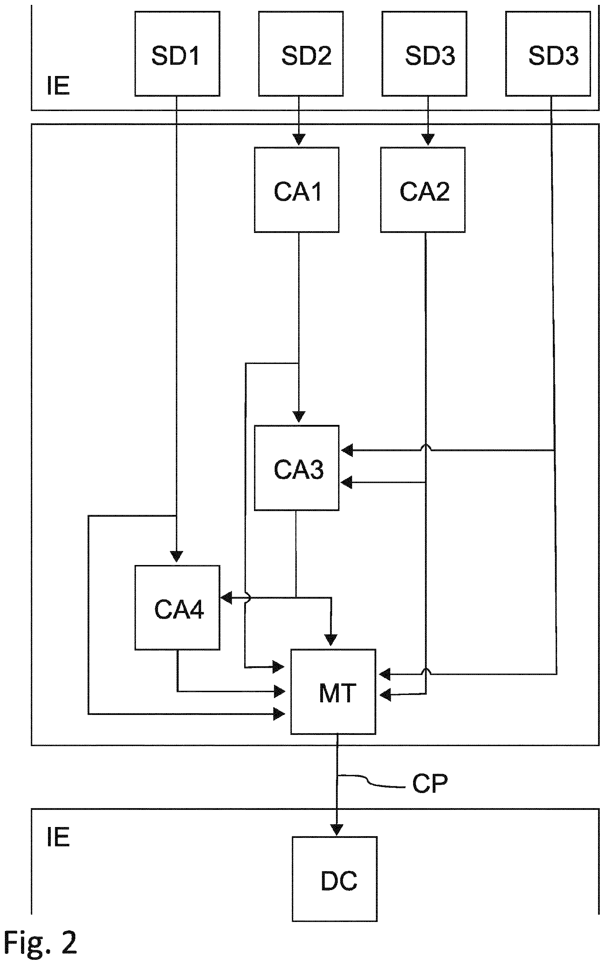

Dans un premier mode de réalisation illustré à la figure 1 et à la figure 2, un premier aspect de l'invention concerne un système de pilotage SP d'une installation électrique IE, ladite installation IE comportant des sources de données SDi et un dispositif de commande DC recevant des consignes de pilotage CP. Le système de pilotage SP comporte une pluralité de composants d'agrégation CAi, chaque composant d'agrégation CAi ayant au moins une connexion d'entrée et une connexion de sortie.

Le système de pilotage comporte également un module de traitement MT connecté aux composants d'agrégation CAi, le module de traitement MT étant configuré pour fournir, à partir des données issues desdits composants d'agrégation CAi des consignes de pilotage CP au dispositif de commande DC de l'installation électrique IE, lesdites consignes de pilotage CP étant établies en fonction d'un modèle physique.

De plus, le modèle physique est choisi en fonction des sources de données SDi par le module de traitement MT, par exemple à partir d'un fichier de configuration, et les composants d'agrégation CAi sont choisis et connectés entre eux et aux sources de données SDi en fonction dudit modèle physique.

Afin d'effectuer les différentes opérations nécessaires au fonctionnement du système de pilotage selon l'invention, chaque composant CAi d'agrégation peut comporter une mémoire (par exemple une mémoire RAM et/ou un mémoire non volatile), une unité de traitement (par exemple un processeur ou un FPGA). De plus, afin d'assurer les différentes connexions entre les composants d'agrégation et les sources de données ou les composants d'agrégation entre eux, les composants d'agrégation CAi comportent des moyens de connexion. Ces moyens de connexion peuvent par exemple prendre la forme d'une carte réseau Ethernet, Wifi, Bluetooth et/ou GSM. Plus généralement, les différentes connexions peuvent être réalisées au moyen de connexions filaires et/ou de connexions sans-fils. Ces connexions peuvent se faire par l'intermédiaire d'un réseau local, d'un réseau étendu et/ou d'Internet. Les protocoles permettant ces connexions peuvent notamment être choisis parmi le HTML, SFTP, SQL, Modbus et/ou Zigbee en fonction de la source de donnés SDi et/ou du composant d'agrégation CAi.

Dans un exemple de réalisation, l'installation électrique IE est un centre de données comportant des cellules photovoltaïques et des batteries. De plus, le centre de données comprend :

- une première source de données SD1 relative au prix de l'énergie à un instant k noté Pr(k) ;
- une deuxième source de données SD2 relative à l'état de charge des batteries à un instant k noté SOC(k) ;
- une troisième source de données SD3 relatives à la prévision photovoltaïque à un instant k noté PCS(k) ; et
- une quatrième source de données SD4 relatives à la consommation des serveurs du centre de données à un instant k noté CES(k).

A partir des sources de données ci-dessus, un modèle physique est choisi. Le choix peut par exemple être effectué par le moyen de traitement MT sur la base d'informations saisies par un opérateur. Par exemple, le choix du modèle physique comprend une première étape de détermination des sources de données SDi disponibles. Cette détermination peut être effectuée à partir d'un fichier de configuration et/ou à partir de données saisies par un opérateur. Le choix comprend également une deuxième étape d'extraction, à partir d'une bibliothèque de modèles physiques, d'une liste de modèles physiques compatibles avec les sources de données SDi disponibles et une troisième étape de sélection d'un modèle physique parmi les modèles de ladite liste.

Dans un exemple de réalisation, le modèle choisi est synthétisé sous la forme d'une fonction d'optimisation FO.

$$FO = MIN\left(\sum_{k=1}^{K} Pr(k) \times PRE(k)\right) \quad (1)$$

Ce modèle vise à minimiser les émissions de gaz carboné associées au centre de données. L'énergie associée à une forte émission de gaz carboné étant en général plus chère, cet objectif est atteint en minimisant le coût de l'énergie sur le réseau. La fonction FO dépend de deux paramètres : Pr(k) le prix de l'énergie sur le réseau et PRE(k) la puissance produite. La puissance produite PRE(k) est par ailleurs égale à la somme de la puissance échangée avec les autres composants de l'installation à l'instant k notée PBAT(k), de la puissance produite par les cellules voltaïques à l'instant k noté PPV(k) et de la consommation des serveurs du centre de données à un instant k noté CES(k) ; autrement dit :

$$PRE(k) = PBAT(k) + PPV(k) + CES(k) \quad (2)$$

La puissance échangée avec les autres composants de l'installation à l'instant k notée PBAT(k) peut être obtenue à partir de l'état de charge des batteries aux instants k et k + 1 à partir de la formule suivante :

$$PBAT(k) = SOC(k + 1) - SOC(k) \quad (3)$$

De plus la puissance produite par les cellules voltaïques à l'instant k noté PPV(k) peut être obtenue à partir des données relatives à la prévision photovoltaïque à un instant k noté PCS(k) ; autrement dit :

$$PCS(k) \rightarrow PPV(k) \quad (4)$$

A partir de ce modèle, un premier composant d'agrégation CA1 est connecté à la source de données SD2 relative à l'état de charge de la batterie SOC(k). Ce composant d'agrégation reçoit donc en entrée l'état de charge de la batterie SOC(k) et comporte des moyens de calcul pour fournir en sortie, en fonction du modèle du composant de batterie, la puissance échangée avec les autres composants de l'installation PBAT(k) à l'instant k. Le premier composant d'agrégation CA1 comporte donc les moyens pour calculer le résultat de l'équation (3) par exemple à l'aide d'un FPGA. La communication entre le premier composant d'agrégation CA1 et la deuxième source de données SD2 peut se faire à l'aide du protocole Modbus via un réseau de type Ethernet ou Modbus Plus ou par l'intermédiaire d'une connexion asynchrone (de type RS-232 par exemple).

De plus, un deuxième composant d'agrégation CA2 est connecté à la troisième source de données SD3 relative à la prévision photovoltaïque à un instant k noté PCS(k). Ce composant d'agrégation reçoit donc en entrée la prévision photovoltaïque PCS(k). Il est en outre configuré pour fournir en sortie, en fonction du modèle de composant photovoltaïque la puissance produite par les cellules voltaïques PPV(k) à l'instant k. Le deuxième composant d'agrégation CA2 comporte donc les moyens pour calculer le résultat de l'équation (4). La communication entre le deuxième composant d'agrégation CA2 et la troisième source de données SDS peut se faire à l'aide du protocole SFTP via un réseau de type Ethernet par exemple.

En outre, un troisième composant d'agrégation CA3 est connecté au premier composant d'agrégation CA1 et au deuxième composant d'agrégation CA2. De plus, ce composant d'agrégation est connecté à la quatrième source de données SD4 relatives à la consommation des serveurs du centre de données CES(k). Ainsi, ce composant d'agrégation dispose en entrée des données relatives à la puissance produite par les cellules voltaïques PPV(k), à la puissance échangée avec les autres composants de l'installation PBAT(k) et à la consommation des serveurs du centre de données CES(k). Ce troisième composant est en outre configuré de sorte à fournie en sortie la puissance produite PRE(k). Le troisième composant d'agrégation CA3 comporte donc les moyens pour calculer le résultat de l'équation (2). La communication entre le troisième composant d'agrégation CA3 et la quatrième source de données SD4 peut se faire à l'aide du protocole SFTP via un réseau de type Ethernet par exemple.

Enfin, un quatrième composant d'agrégation CA4 est connecté au troisième composant d'agrégation CA3 et à la première source de donnée SD1 relative au prix de l'énergie à un instant k noté Pr(k). Ainsi, le quatrième composant d'agrégation CA4 dispose en entrée de la puissance produite PRE(k) et le prix de l'énergie Pr(k). Il est en outre configuré pour fournir en sortie la fonction d'optimisation FO. Le troisième composant d'agrégation CA4 comporte donc les moyens pour calculer le résultat de l'équation (1).

Ainsi, à partir d'un modèle physique exprimé sous la forme d'une fonction d'optimisation FO propre à l'installation électrique, les connexions entre les différents composants d'agrégation entre eux et avec les sources de données sont établies. De plus, la fonction associée à chaque composant d'agrégation est choisie de sorte à obtenir, à partir des sources de données, la fonction d'optimisation FO correspondant au modèle physique.

Afin de fournir les consignes de pilotage, il est nécessaire de traiter la fonction d'optimisation FO obtenue. Pour cela, le quatrième composant d'agrégation CA4 est connecté à un moyen de traitement MT. Le moyen de traitement MT est configuré pour, à partir de la fonction d'optimisation FO, fournir les consignes de pilotage CP au dispositif de commande DC. La consigne peut par exemple consister à une consigne de puissance pour la batterie.

Dans un mode de réalisation, chaque source de données SDi de l'installation électrique est associée à un pas de temps d'échantillonnage. De plus, les consignes de pilotage CP sont établies en fonction d'un pas de temps, dit pas de temps de pilotage, et chaque composant d'agrégation CA connecté à une source de données SDi ayant un pas de temps d'échantillonnage différent du pas de temps de pilotage est configuré pour fournir, à partir des données reçues de la source de données SDi, des données ayant un pas de temps égal au pas de temps de pilotage. Cette adaptation du pas de temps de données pourra par exemple être effectuée à l'aide d'une interpolation des données. Cette adaptation se faisant à l'échelle d'une seule source de donnée SDi, il sera donc possible de prendre en compte les spécificités de chaque source de donnée SDi dans l'adaptation du pas de temps. Autrement dit, le composant d'agrégation pourra mettre en oeuvre des méthodes d'adaptation du pas de temps différentes en fonction de la source de données à laquelle ce dernier est configuré pour se connecter. Pour effectuer cette adaptation, le composant d'agrégation CAi pourra par exemple disposer d'un modèle physique associé à la source de données SDi. Le modèle physique pourra par exemple être stocké dans une mémoire volatile (ou la mémoire vive) du composant d'agrégation. Le module d'agrégation CAi pourra alors, à partir du modèle physique de la source de donnée SDi, et à l'aide de moyen de calcul (par exemple un processeur), optimiser l'adaptation du pas de temps en prenant en compte les spécificités de la source de données SDi.

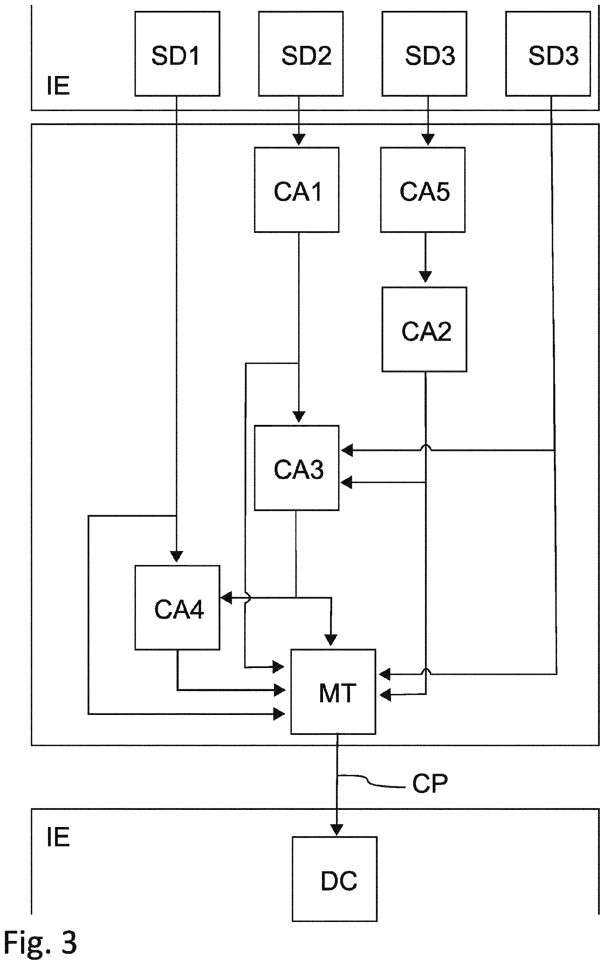

Dans un exemple de réalisation illustré à la figure 3, la troisième source de données SD3 relatives à la prévision photovoltaïque PCS(k) a un pas de temps différent du pas de temps d'optimisation. Le système de pilotage comprend donc un cinquième composant d'agrégation CA5 configuré pour fournir, à partir des données reçues de la source de données SD3, des données ayant un pas de temps égal au pas de temps de pilotage. Ainsi, en sortie du cinquième composant d'agrégation, le pas de temps de la prévision photovoltaïque PCS(k) est identique au pas de temps de pilotage et le cinquième composant d'agrégation CA5 peut être connecté au deuxième composant d'agrégation CA2.

Dans un mode de réalisation, le module de traitement MT comprend un composant de filtrage CF comportant des moyens pour envoyer les données à un moyen de calcul CC et recevoir les résultats des calculs en provenance dudit moyen de calcul CC. La connexion entre le module de traitement et le module de calcul peut par exemple se faire via un réseau local, un réseau étendu et/ou Internet. Le module de traitement MT dispose alors de moyens de connexion (par exemple une carte réseau de type Ethernet ou Wifi) et de moyens de calcul (par exemple un processeur) nécessaire à l'établissement de cette connexion. Le moyen de traitement MT peut également comprend un moyen de stockage, par exemple une mémoire non volatile de type flash, afin de mémoriser les paramètres nécessaires à l'établissement de cette connexion.

Dans un exemple de réalisation, le module de traitement MT envoie, par l'intermédiaire de son composant de filtrage CF la fonction à optimiser FO à un moyen de calcul CC, puis recevoir en résultat la puissance échangée avec les autres composants de l'installation PBAT(k). A partir de ce résultat, le moyen de traitement fournit une consigne de puissance pour la batterie.

Dans un mode de réalisation, l'installation électrique IE comprend des sources de données SDi dites sensibles et le composant de filtrage CF du module de traitement MT comporte des moyens pour chiffrer les données issues des composants d'agrégation CAi configurés pour être connectés à des sources de données SDi dites sensibles, pour envoyer lesdites données chiffrées au moyen de calcul CC, pour recevoir les résultats chiffrés des calculs en provenance dudit moyen de calcul CC et pour déchiffrer lesdits résultats. L'envoi peut par exemple être effectué à l'aide d'un protocole sécurisé du type HTTPS, le chiffrement étant réalisé par le protocole TLS ou SSL. Le moyen de traitement MT comprend lors des moyens de stockage, par exemple une mémoire flash, afin de permettre la mémorisation des différentes clés et différents certificats nécessaires au chiffrement de la connexion.

Dans un exemple de réalisation, la source de données relative à la consommation des serveurs du centre de données CES(k) est sensible. Les données issues du deuxième composant d'agrégation CA2 sont donc chiffrées avant par le composant de filtrage avant d'être envoyées au moyen de calcul. De la même manière, les calculs effectués en prenant en compte des données issues du deuxième composant d'agrégation sont déchiffrés par ce même composant de filtrage.

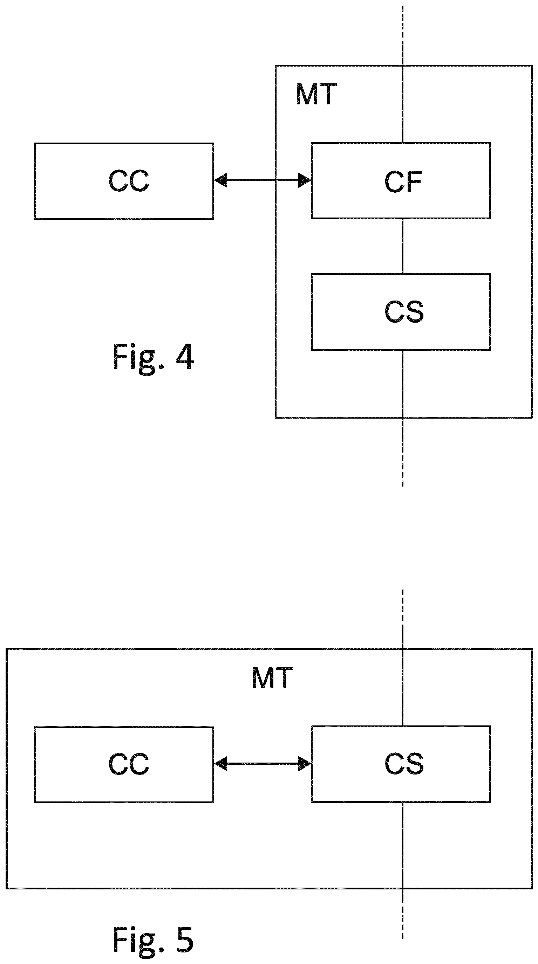

Dans un mode de réalisation illustré à la figure 4, le module de traitement MT comprend un composant de stratégie CS connecté au composant de filtrage CF, ledit composant de stratégie CS comportant des moyens pour fournir des consignes de pilotage CP en fonction des résultats de calcul reçus du composant de filtrage CF. Ces moyens peuvent notamment comprendre un processeur, une mémoire vive et une mémoire non volatile.

Dans un exemple de réalisation, le composant de filtrage envoie la fonction à optimiser FO à un moyen de calcul, puis reçoit en résultat la puissance échangée avec les autres composants de l'installation PBAT(k). Le composant de filtrage transmet ensuite ce résultat au composant de stratégie CS qui génère des consignes de puissance pour la batterie et transmet lesdites consignes au dispositif de commande DC du centre de données.

Dans un mode de réalisation alternatif ou complémentaire illustré à la figure 5, le module de traitement MT comprend un composant de calcul CC configuré pour calculer, au moins en partie, les consignes d'optimisation. Ce composant de calcul CC peut par exemple comprendre un processeur, une mémoire vive et une mémoire non volatile. Ainsi, il n'est plus nécessaire d'avoir recours à un moyen de calcul extérieur.

Dans un exemple de réalisation, le composant de calcul CC est configuré pour calculer, à partir de la fonction à optimiser FO, la puissance échangée avec les autres composants de l'installation PBAT(k). Le composant de calcul transmet le résultat du calcul au composant de stratégie CS qui fournit une consigne de puissance pour la batterie.

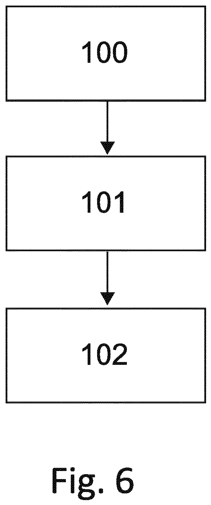

Afin de réaliser le système de pilotage SP selon un premier aspect de l'invention, un mode de réalisation illustré à la figure 6 selon un deuxième aspect de l'invention concerne un procédé de réalisation d'un système de pilotage SP pour le pilotage d'une installation électrique IE, ladite installation IE comportant des sources de données SDi et un dispositif de commande DC recevant des consignes de pilotage CP. Le procédé de réalisation d'un système de pilotage SP comprend :

- une étape 100 de mise en place d'une pluralité de composant d'agrégations ;
- une étape 101 de connexion de chaque composant d'agrégation (CAi) à une source de données et/ou à un ou plusieurs composants d'agrégations ;
- une étape 103 de connexion d'un module de traitement MT aux composants d'agrégation CAi, ledit module de traitement MT étant configuré pour à fournir, à partir des données issues desdits composants d'agrégation CAi, des consignes de pilotage CP au dispositif de commande DC de l'installation électrique IE, lesdites consignes de pilotage CP étant établies en fonction d'un modèle physique.

De plus, le modèle physique est choisi en fonction des sources de données SDi par le module de traitement MT, par exemple à partir d'un fichier de configuration, les composants d'agrégation CAi étant choisis et connectés entre eux et aux sources de données SDi en fonction dudit modèle physique lors de l'étape de mise en place et de l'étape de connexion.

Dans un exemple de réalisation, l'installation électrique IE est un centre de données tel que décrit précédemment. L'étape 101 de connexion comporte alors une première sous-étape de connexion d'un premier composant d'agrégation CA1 à la source de données SD2 relative à l'état de charge de la batterie SOC(k). Ce composant d'agrégation reçoit donc en entrée l'état de charge de la batterie SOC(k) et comporte des moyens de calcul pour fournir en sortie, en fonction du modèle du composant de batterie, la puissance échangée avec les autres composants de l'installation PBAT(k) à l'instant k.

Elle comprend également une deuxième sous-étape de connexion d'un deuxième composant d'agrégation CA2 à la troisième source de données SD2 relative à la prévision photovoltaïque à un instant k noté PCS(k). Ce composant d'agrégation reçoit donc en entrée la prévision photovoltaïque PCS(k). Il est en outre configuré pour fournir en sortie, en fonction du modèle de composant photovoltaïque la puissance produite par les cellules voltaïques PPV(k) à l'instant k.

Elle comprend en outre une troisième sous-étape de connexion d'un troisième composant d'agrégation au premier composant d'agrégation CA1 et au deuxième composant d'agrégation CA2 ainsi qu'une quatrième sous-étape de connexion de ce composant d'agrégation à la quatrième source de données relatives à la consommation des serveurs du centre de données CES(k). Ainsi, ce composant d'agrégation dispose en entrée des données relatives à la puissance produite par les cellules voltaïques PPV(k), à la puissance échangée avec les autres composants de l'installation PBAT(k) et à la consommation des serveurs du centre de données CES(k). Ce troisième composant est en outre configuré de sorte à fournie en sortie la puissance produite PRE(k).

Elle comprend enfin une cinquième sous-étape de connexion d'un quatrième composant d'agrégation CA4 au troisième composant d'agrégation CA3 et à la première source de donnée SD1 relative au prix de l'énergie à un instant k noté Pr(k). Ainsi, le quatrième composant d'agrégation CA4 dispose en entrée de la puissance produite PRE(k) et le prix de l'énergie Pr(k).

Ainsi, les composants d'agrégation CAi sont choisis et connectés entre eux et aux sources de données SDi en fonction du modèle physique lors de l'étape de mise en place et de l'étape de connexion.

Le procédé comprend également une étape 103 de connexion d'un module de traitement MT aux composants d'agrégation CA4.

Dans un mode de réalisation, un troisième aspect de l'invention concerne un produit programme d'ordinateur comprenant les instructions qui, lorsqu'elles sont exécutées par un ordinateur, mettent en œuvre le procédé selon un deuxième aspect de l'invention. Dans ce mode réalisation, les composants d'agrégation CAi et le module de traitement MT sont alors contenus dans une librairie et susceptibles d'être chargés en mémoire.

Le module de traitement est d'abord chargé en mémoire. Une fois les sources de données SDi connues, un modèle physique est choisi en fonction de la nature des sources de données SDi par le module de traitement MT puis ce dernier charge en mémoire les composants d'agrégation CAi adaptés auxdites sources de données SDi et de sorte à réaliser l'interfaçage entre l'installation électrique IE et le système de pilotage SP.

Une fois chargé en mémoire, le système de pilotage SP reçoit des données provenant des sources de données SDi. Ces données sont ensuite traitées par les composants d'agrégation CAi et envoyées au module de traitement MT. Les données, une fois traitées par le module de traitement MT, donnent lieu à l'émission de consignes de pilotage CP en direction de l'installation électrique IE.

**Revendications**

1. Système de pilotage (SP) d'une installation électrique (IE), ladite installation (IE) comportant des sources de données (SDi) et un dispositif de commande (DC) recevant des consignes de pilotage (CP) ; ledit système (SP) étant **caractérisé en ce qu'**il comporte :

   - une pluralité de composants d'agrégation (CAi), chaque composant d'agrégation ayant au moins une connexion d'entrée et une connexion de sortie ainsi qu'un moyen de traitement des données configuré pour traiter les données reçues sur la connexion d'entrée ;
   - un module de traitement (MT) connecté aux composants d'agrégation (CAi), le module de traitement (MT) étant configuré pour fournir, à partir des données issues desdits composants d'agrégation (CAi) des consignes de pilotage (CP) au dispositif de commande (DC) de l'installation électrique (IE), lesdites consignes de pilotage (CP) étant établies en fonction d'un modèle physique ;

   ledit modèle physique étant choisi en fonction des sources de données (SDi) par le module de traitement, les composants d'agrégation (CAi) étant choisis et connectés entre eux et aux sources de données (SDi) en fonction dudit modèle physique.

2. Système de pilotage (SP) selon la revendication précédente dans lequel chaque source de données (SDi) de l'installation électrique est associée à un pas de temps d'échantillonnage, ledit système (SP) étant **caractérisé en ce que** les consignes de pilotage (CP) sont établies en fonction d'un pas de temps, dit pas de temps de pilotage, et **en ce que** chaque composant d'agrégation connecté à une source de données (SDi) ayant un pas de temps d'échantillonnage différent du pas de temps de pilotage, est configuré pour fournir, à partir des données reçues de la source de donnée (SDi), des données ayant un pas de temps égal au pas de temps de pilotage.

3. Système de pilotage (SP) selon l'une des deux revendications précédentes **caractérisé en ce que** le module de traitement (MT) comprend un composant de filtrage (CF) comportant des moyens pour envoyer les données issues des composants d'agrégation (CAi) à un moyen de calcul (CC) et recevoir les résultats des calculs en provenance dudit moyen de calcul (CC).

4. Système de pilotage (SP) selon la revendication précédente dans lequel l'installation électrique (IE) comprend des sources de données (SDi) dites sensibles, ledit système (SP) étant **caractérisé en ce que** le composant de filtrage (CF) comporte des moyens pour chiffrer les données issues des composants d'agrégation (CAi) configurés pour être connectés à des sources de données (SDi) dites sensibles, pour envoyer lesdites données chiffrées au moyen de calcul (CC), pour recevoir les résultats chiffrés des calculs en provenance dudit moyen de calcul (CC) et pour déchiffrer lesdits résultats.

5. Système de pilotage (SP) selon la revendication précédente **caractérisé en ce que** le module de traitement (MT) comprend un composant de stratégie (CS) connecté au composant de filtrage (CF), ledit composant de stratégie (CS) comportant des moyens pour fournir des consignes de pilotage (CP) en fonction des résultats de calcul reçus du composant de filtrage (CF).

6. Procédé de réalisation d'un système de pilotage (SP) pour le pilotage d'une installation électrique (IE), ladite installation (IE) comportant des sources de données (SDi) et un dispositif de commande (DC) recevant des consignes de pilotage (CP) ; ledit procédé étant **caractérisé en ce qu'**il comprend :

- une étape (100) de mise en place d'une pluralité de composants d'agrégation, chaque composant d'agrégation ayant au moins une connexion d'entrée et une connexion de sortie ainsi qu'un moyen de traitement des données configuré pour traiter les données reçues sur la connexion d'entrée ;
- une étape (101) de connexion de chaque composant d'agrégation (CAi) à une source de données et/ou à un ou plusieurs composants d'agrégation ;
- une étape (102) de connexion d'un module de traitement (MT) aux composants d'agrégation (CAi), ledit module de traitement (MT) étant configuré pour fournir, à partir des données issues desdits composants d'agrégation (CAi), des consignes de pilotage (CP) au dispositif de commande (DC) de l'installation électrique (IE), lesdites consignes de pilotage (CP) étant établies en fonction d'un modèle physique ;

ledit modèle physique étant choisi en fonction des sources de données (SDi) par le module de traitement (MT), les composants d'agrégation (CAi) étant choisis et connectés entre eux et aux sources de données (SDi) en fonction dudit modèle physique lors de l'étape de mise en place et de l'étape de connexion.

7. Produit programme d'ordinateur comprenant des instructions pour l'exécution des étapes du procédé selon la revendication 6 lorsque ledit programme est exécuté sur un ordinateur.

**Patentansprüche**

1. Steuersystem (SP) einer elektrischen Anlage (IE), wobei die genannte Anlage (IE) Datenquellen (SDi) und eine Steuervorrichtung (DC) umfasst, die Steueranweisungen (CP) empfängt, wobei das genannte System (SP) **dadurch gekennzeichnet ist, dass** es umfasst:

- eine Vielzahl von Aggregationsbauteilen (CAi), wobei jedes Aggregationsbauteil wenigstens einen Eingangsanschluss und einen Ausgangsanschluss sowie ein Verarbeitungsmittel der Daten aufweist, das zum Verarbeiten der an dem Eingangsanschluss empfangenen Daten ausgestaltet ist;
- ein Verarbeitungsmodul (MT), das an die Aggregationsbauteile (CAi) angeschlossen ist, wobei das Verarbeitungsmodul (MT) zum Liefern der Steueranweisungen (CP) an die Steuervorrichtung (DC) der elektrischen Anlage (IE) ausgehend von den aus den genannten Aggregationsbauteilen (CAi) stammenden Daten ausgestaltet ist, wobei die genannten Steuerdaten (CP) in Abhängigkeit von einem physischen Modell erstellt sind;

wobei das genannte physische Modell in Abhängigkeit von den Datenquellen (SDi) durch das Verarbeitungsmodul ausgewählt ist, wobei die Aggregationsbauteile (CAi) in Abhängigkeit von dem genannten physischen Modell ausgewählt und aneinander und an die Datenquellen (SDi) angeschlossen sind.

2. Steuersystem (SP) gemäß dem voranstehenden Anspruch, bei dem jede Datenquelle (SDi) der elektrischen Anlage einem Probennahmen-Zeitschritt zugeordnet ist, wobei das genannte System (SP) **dadurch gekennzeichnet ist, dass** die Steueranweisungen (SP) in Abhängigkeit von einem Zeitschritt, bezeichnet als Steuer-Zeitschritt, erstellt sind und dass jedes Aggregationsbauteil, das an eine Datenquelle (SDi) angeschlossen ist, einen vom Steuer-Zeitschritt unterschiedlichen Zeitschritt aufweist und ausgestaltet ist, um ausgehend von den von der Datenquelle (SDi) empfangenen Daten Daten zu liefern, die einen Zeitschritt aufweisen, der gleich dem Steuer-Zeitschritt ist.

3. Steuersystem (SP) gemäß einem der zwei voranstehenden Ansprüche, **dadurch gekennzeichnet, dass** das Verarbeitungsmodul (MT) ein Filterbauteil (CF) umfasst, umfassend Mittel zum Versenden der aus den Aggregationsbauteilen (CAi) stammenden Daten an ein Berechnungsmittel (CC) und zum Empfangen der Ergebnisse der aus dem genannten Berechnungsmittel (CC) stammenden Berechnungen.

4. Steuersystem (SP) gemäß dem voranstehenden Anspruch, bei dem die elektrische Anlage (IE) als sensibel bezeichnete Datenquellen (SDi) umfasst, wobei das genannte System (SP) **dadurch gekennzeichnet ist, dass** das Filterbauteil (CAi) Mittel umfasst, um die Daten zu chiffrieren, die aus den Aggregationsbauteilen (CF) stammen, die ausgestaltet sind, um an als sensibel bezeichnete Datenquellen (SDi) angeschlossen zu sein, um die genannten chiffrierten Daten an das Berechnungsmittel (CC) zu senden, um die chiffrierten Ergebnisse der aus dem genannten Berechnungsmittel (CC) stammenden Berechnungen zu empfangen und um die genannten Ergebnisse zu dechiffrieren.

5. Steuersystem (SP) gemäß dem voranstehenden Anspruch, **dadurch gekennzeichnet, dass** das Verarbeitungsmodul (MT) ein Strategiebauteil (CS) umfasst, das an das Filterbauteil (CF) angeschlossen ist, wobei das genannte Strategiebauteil (CS) Mitte zum Liefern der Steueranweisungen (CP) in Abhängigkeit von den vom Filterbauteil (CF) empfangenen Berechnungsergebnisse umfasst.

6. Realisierungsverfahren eines Steuersystems (SP) zum Steuern einer elektrischen Anlage (IE), wobei die genannte Anlage (IE) Datenquellen (SDi) und eine Steuervorrichtung (DC) umfasst, die Steueranweisungen (CP) empfangen; wobei das genannte Verfahren **dadurch gekennzeichnet ist, dass** es umfasst:

   - einen Einsetzungsschritt (100) einer Vielzahl von Aggregationsbauteilen, wobei jedes Aggregationsbauteil wenigstens einen Eingangsanschluss und einen Ausgangsanschluss sowie ein Verarbeitungsmittel der Daten aufweist, das zum Verarbeiten der am Eingangsanschluss empfangenen Daten ausgestaltet ist,
   - einen Anschlussschritt (101) jedes Aggregationsbauteils (CAi) an eine Datenquelle und/oder an ein oder mehrere Aggregationsbauteil(e),
   - einen Anschlussschritt (102) eines Verarbeitungsmoduls (MT) an die Aggregationsbauteile (CAi), wobei das genannte Verarbeitungsmodul (MT) ausgestaltet ist, um ausgehend von den aus den genannten Aggregationsbauteilen (CAi) stammenden Daten Steueranweisungen (CP) an die Steuervorrichtung (DC) der elektrischen Anlage (IE) zu liefern, wobei die genannten Steueranweisungen (CP) in Abhängigkeit von einem physischen Modell erstellt werden,

   wobei das genannte physische Modell in Abhängigkeit von den Datenquellen (SDi) durch das Verarbeitungsmodul (MT) gewählt wird, wobei die Aggregationsbauteile (CAi) ausgewählt und aneinander und an die Datenquellen (SDi) in Abhängigkeit von dem physischen Modell beim Einsetzungsschritt und dem Anschlussschritt angeschlossen werden,

7. Computerprogrammprodukt, umfassend Anweisungen für die Ausführung der Schritte des Verfahrens gemäß Anspruch 6, wenn das genannte Programm auf einem Computer ausgeführt ist.


**Claims**

1. Control system (SP) for an electrical installation (IE), said installation (IE) comprising data sources (SDi) and a control device (DC) receiving control instructions (CP); said system (SP) being **characterised in that** it comprises:

   - a plurality of aggregation components (CAi), each aggregation component having at least one input connection and one output connection as well as a data processing means configured to process the data received on the input connection;
   - a processing module (MT) connected to the aggregation components (CAi), the processing module (MT) being configured to provide, from the data coming from said aggregation components (CAi) control instructions (CP) to the control device (DC) of the electrical installation (IE), said control instructions (CP) being established according to a physical model;

   said physical model being chosen according to the data sources (SDi) by the processing module, the aggregation components (CAi) being chosen and connected together and to the data sources (SDi) according to said physical model.

2. Control system (SP) according to the preceding claim wherein each data source (SDi) of the electrical installation is associated with a sampling time step, said system (SP) being **characterised in that** the control instructions (CP) are established according to a time step, called the control time step, and **in that** each aggregation component connected to a data source (SDi) having a sampling time step that is different from the control time step, is configured to provide, from the data received from the data source (SDi), data having a time step equal to the control time step.

3. Control system (SP) according to one of the two preceding claims **characterised in that** the processing module (MT) comprises a filtering component (CF) comprising means for sending the data coming from the aggregation components (CAi) to a means of computing (CC) and receiving the results of the calculations coming from said means of computing (CC).

4. Control system (SP) according to the preceding claim wherein the electrical installation (IE) comprises so-called sensitive data sources (SDi), said system (SP) being **characterised in that** the filtering component (CF) comprises means for encrypting the data coming from the aggregation components (CAi) configured to be connected to so-called sensitive data sources (SDi), to send said encrypted data to the means of computing (CC), to receive the encrypted results of the calculations coming from said means of computing (CC) and to decrypt said results.

5. Control system (SP) according to the preceding claim **characterised in that** the processing module (MT) comprises a strategy component (CS) connected to the filtering component (CF), said strategy component (CS) comprising means for providing control instructions (CP) according to the calculation results received from the filtering component (CF).

6. Method for producing a control system (SP) for controlling an electrical installation (IE), said installation (IE) comprising data sources (SDi) and a control device (DC) receiving control instructions (CP); said method being **characterised in that** it comprises:

   - a step (100) of setting up a plurality of aggregation components, each aggregation component having at least one input connection and one output connection as well as a data processing means configured to process the data received on the input connection
   - a step (101) of connecting each aggregation component (CAi) to a data source and/or to one or more aggregation components
   - a step (102) of connecting a processing module (MT) to the aggregation components (CAi), said processing module (MT) being configured to provide, from the data coming from said aggregation components (CAi), control instructions (CP) to the control device (DC) of the electrical installation (IE), said control instructions (CP) being established according to a physical model;

   said physical model being chosen according to the data sources (SDi) by the processing module (MT), the aggregation components (CAi) being chosen and connected together and to the data sources (SDi) according to said physical model during the step of setting up and the step of connecting.

7. Computer program product comprising instructions for the execution of the steps of the method according to claim 6 when said program is executed on a computer.

Fig. 1

Fig. 2

Fig. 3

Fig. 4

Fig. 5

Fig. 6

**EP 3 321 635 B1**

## RÉFÉRENCES CITÉES DANS LA DESCRIPTION

**Documents brevets cités dans la description**

*   WO 2013186282 A2